# EUROPÄISCHE PATENTANMELDUNG

(11) **EP 2 189 271 A1**
(43) Veröffentlichungstag der Anmeldung: **26.05.2010**
(21) Anmeldenummer: 09176468.8
(22) Anmeldetag: 19.11.2009
(51) Int. Cl.: B29C 65/22, B65H 69/08, D04H 1/54, A24D 3/02, B29C 65/78

(54) **Filtermaterialstreifenverbindungsverfahren und -vorrichtung**

(30) Priorität: 24.11.2008 DE 102008058789
(71) Anmelder: HAUNI Maschinenbau AG, 21033 Hamburg (DE)
(72) Erfinder: Schildknecht, Joachim, 21037, Hamburg (DE); Wiesemann, Stefan, 21465, Wentorf (DE)
(74) Vertreter: Seemann, Ralph

(57) **Zusammenfassung**

Die Erfindung betrifft ein Verfahren zum Verbinden eines ersten Filtermaterialstreifens (10) der Tabak verarbeitenden Industrie mit einem zweiten Filtermaterialstreifen (11) der Tabak verarbeitenden Industrie.

Die Erfindung betrifft ferner eine Vorrichtung zur Verbindung eines ersten Filtermaterialstreifens (10) der Tabak verarbeitenden Industrie und eines zweiten Filtermaterialstreifens (11) der Tabak verarbeitenden Industrie, wobei eine Heizvorrichtung (14-17) und eine erste und eine zweite Klemmvorrichtung (18, 19) vorgesehen sind.

Das erfindungsgemäße Verfahren zeichnet sich durch die folgenden Verfahrensschritte aus:
- Strecken des ersten und des zweiten Filtermaterialstreifens (10, 11) mit einer, insbesondere vorgebbaren, Streckkraft,
- Übereinanderlegen des ersten und des zweiten Filtermaterialstreifens (10, 11) zumindest in einem Verbindungsbereich (27),
- Lösen der Streckkraft bei den Abschnitten (28, 29) der Filtermaterialstreifen (10, 11), die zur Weiterverarbeitung dienen, und
- Verbinden der Filtermaterialstreifen (10, 11) in dem Verbindungsbereich.

Die erfindungsgemäße Vorrichtung zeichnet sich dadurch aus, dass die erste Klemmvorrichtung (18), die Heizvorrichtung (14-17) und die zweite Klemmvorrichtung (19) hintereinander, insbesondere im Wesentlichen in einer Flucht, angeordnet sind.

## Beschreibung

Die Erfindung betrifft ein Verfahren zum Verbinden eines ersten Filtermaterialstreifens der Tabak verarbeitenden Industrie mit einem zweiten Filtermaterialstreifen der Tabak verarbeitenden Industrie.

Die Erfindung betrifft ferner eine Vorrichtung zur Verbindung eines ersten Filtermaterialstreifens der Tabak verarbeitenden Industrie und eines zweiten Filtermaterialstreifens der Tabak verarbeitenden Industrie, wobei eine Heizvorrichtung und eine erste und eine zweite Klemmvorrichtung vorgesehen sind.

Aus EP 0 542 868 B1 sind ein Verfahren und eine Vorrichtung zum Verschmelzungsspleißen von flexiblen Fasern und dafür verwendetes Material bekannt, wobei insbesondere auch Filtermaterialstreifen in Form von Filtertow, das ein Bündel oder ein Band mehrerer Fasern geringen Querschnitts aufweist, miteinander verbunden werden. Dieses tritt beispielsweise dann auf, wenn Filtertow aus einem Towballen sich dem Ende neigt und das Ende dieses Towballens mit dem Anfang eines weiteren Towballens zu verbinden ist, damit die Fertigung von Filtern der Tabak verarbeitenden Industrie ohne Unterbrechung durchgeführt werden kann. Hierzu wird dann ein Endstück bzw. Endabschnitt des Filtertows des sich zum Ende neigenden Towballens mit dem Anfangsstück bzw. Anfangsabschnitt eines Filtertows eines neuen Towballens miteinander verbunden, beispielsweise miteinander verschmolzen.

Hierzu schlägt die EP 0 542 868 B1 eine relativ großbauende Vorrichtung vor, bei der die geschweißten Verbindungsstellen der Filtermaterialstreifen relativ schwach sind und die in der folgenden Weiterverarbeitung relativ leicht wieder aufgehen können.

Es ist Aufgabe der vorliegenden Erfindung, ein Verfahren zum Verbinden eines ersten Filtermaterialstreifens der Tabak verarbeitenden Industrie mit einem zweiten Filtermaterialstreifen der Tabak verarbeitenden Industrie anzugeben, mittels dem eine homogene Verteilung der Filamente des Filtermaterialstreifens in der Verbindungsstelle ermöglicht ist. Es ist ferner Aufgabe der vorliegenden Erfindung, hierzu eine entsprechende Vorrichtung zur Verfügung zu stellen.

Gelöst wird diese Aufgabe durch ein Verfahren zum Verbinden eines ersten Filtermaterialstreifens der Tabak verarbeitenden Industrie mit einem zweiten Filtermaterialstreifen der Tabak verarbeitenden Industrie mit den folgenden Verfahrensschritten:
- Strecken des ersten und des zweiten Filtermaterialstreifens mit einer, insbesondere vorgebbaren, Streckkraft,
- Übereinanderlegen des ersten und des zweiten Filtermaterialstreifens zumindest in einem Verbindungsbereich,
- Lösen der Streckkraft bei den Abschnitten der Filtermaterialstreifen, die zur Weiterverarbeitung dienen, und
- Verbinden der Filtermaterialstreifen in dem Verbindungsbereich.

Erfindungsgemäß wurde überraschenderweise gefunden, dass die zu verbindenden Filtermaterialstreifenabschnitte, d.h. das Ende des Filtermaterialstreifens des Filtermaterialstreifenballens, der sich dem Ende neigt, mit dem Anfang des Filtermaterialstreifens des Filtermaterialstreifenballens, der mit dem anderen Abschnitt des anderen Filtermaterialstreifens verbunden werden soll, dadurch homogener verteilt wird, dass die Filamente vor dem Verbinden gestreckt werden, aber während des Verbindens wieder entlastet werden. Hierdurch wird insbesondere eine besonders feste Verbindungsstelle ermöglicht. Alternativ kann auch bei einem Towsorten- bzw. Filtermaterialstreifensortenwechsel ohne komplette Filtermaterialstreifenballenentleerung ein Verschweißen der Filtermaterialstreifen stattfinden.

Vorzugsweise werden die Filtermaterialstreifen reckfrei gestreckt. Unter einem reckfreien Strecken ist im Rahmen der vorliegenden Erfindung eine elastische Dehnung gemeint. Das Maß der Dehnung ist hierbei abhängig von der Spezifikation des Filtermaterialstreifens. Ein Filtermaterialstreifen mit vielen dünnen Filamenten lässt sich weiter elastisch dehnen bzw. reckfrei strecken als solche mit dickeren Filamenten. Eine plastische Verformung findet üblicherweise erst in einem späteren Verfahrensschritt statt, um ein Aufbauschen der Filamente des Filtermaterialstreifens zu erzielen, um so im fertigen Filter eine gleichmäßige und reproduzierbare Zugkraft zu erzielen.

Vorzugsweise wird zum reckfreien Strecken eine Streckkraft zwischen 0,1 N und 100 N, insbesondere zwischen 1 N und 10 N, verwendet. Diese ist abhängig von den Filtermaterialstreifensorten, insbesondere den verwendeten Towsorten. Bei den verwendeten Towsorten handelt es sich beispielsweise um 3Y35, 5Y35, 6Y17, 1.5Y38 und 2.1Y25, zu beziehen über die Firma Rhodia Acetow, Deutschland. Sehr gut reckfrei strecken lässt sich die Sorte 1.5Y38. Relativ gut lässt sich die Sorte 2.1Y25 reckfrei strecken und schwierig reckfrei zu strecken sind 5Y35 und 6Y17. Bei dem Filtermaterial handelt es sich beispielsweise um Zelluloseacetat bzw. Zelluloseester.

Vorzugsweise umfasst das Übereinanderlegen ein Aufeinanderdrücken der Filtermaterialstreifen. Hierbei wird beispielsweise mit einer Zange ein Druckmoment von beispielsweise 4 Nm angewendet. Das Druckmoment kann allerdings auch in anderen Wertebereichen angewendet werden. Beispielsweise kann vorzugsweise auch das Druckmoment beim Verbinden der Filtermaterialstreifen im Verbindungsbereich auch erhöht sein oder werden, und zwar beispielsweise auf einen Wertebereich von 10 Nm bis 40 Nm, insbesondere 12 Nm bis 20 Nm, welches zu einer erhöhten Flächenpressung führt, und zwar in einem Wertebereich von 100 bis 2000 N/m², insbesondere 500 bis 1000 N/m².

Vorzugsweise werden die Filtermaterialstreifen längsaxial übereinander gelegt. In diesem Fall haben die Filamente bzw. Fasern der Filtermaterialstreifen bzw. in den Filtermaterialstreifen eine längsaxiale Ausrichtung und werden längsaxial auf Fasern des anderen Filtermaterialstreifens aufgelegt. Hierdurch kann eine sehr homogene Verteilung der Filamente erreicht werden.

Vorzugsweise geschieht das Verbinden durch Wärmeschweißen, insbesondere vorzugsweise in einem Temperaturbereich von 150°C bis 310°C, insbesondere von 200°C bis 250°C. Bevorzugterweise ist der Temperaturbereich bei im Wesentlichen 240°C. Vorzugsweise wird während des Wärmeschweißens ein vor dem Wärmeschweißen vorherrschendes Druckmoment im Verbindungsbereich erhöht, beispielsweise wie oben schon dargestellt auf ein Druckmoment von 10 Nm bis 40 Nm, insbesondere 12 Nm bis 20 Nm. Hierdurch wird es ermöglicht, dass eine stabilere Naht im Verbindungsbereich zwischen den Filtermaterialstreifen erzeugt wird, und zwar bei niedrigerer Temperatur. Hierdurch kann eine erheblich längere Standzeit der Wärmeschweißvorrichtung erzielt werden, und zwar insbesondere von auf die Oberflächen der Wärmeschweißvorrichtung aufgebrachte Kunststoffe bzw. Kunststoffbänder, bspw. Teflon oder ähnliche Materialien, die noch im Folgenden bezeichnet werden.

Vorzugsweise werden die nicht zur Weiterverarbeitung dienenden Filtermaterialstreifenabschnitte abgezogen. Hierzu wird das Ende des ersten Filtermaterialstreifens und der Anfang des zweiten Filtermaterialstreifens, also die Filtermaterialstreifenabschnitte, die nicht zur Weiterverarbeitung dienen, auf Zugspannung zum Verbindungsbereich gesetzt, so dass beim Wärmeschweißen sich beispielsweise dann nach Bildung der Verbindung diese Filtermaterialstreifenabschnitte lösen und entsprechend abgezogen werden können.

Vorzugsweise initiiert das Abziehen ein Beenden des Verbindens der Filtermaterialstreifen, insbesondere das Beenden eines Heizvorganges, der zum Wärmeschweißen dient. Dieses geschieht vorzugsweise automatisch.

Vorzugsweise wird eine sich bildende Verbindungsnaht anschließend geplättet, beispielsweise durch Erwärmen und Druckausübung auf die Verbindungsnaht zwischen den Filtermaterialstreifen.

Gelöst wird die Aufgabe ferner durch eine Vorrichtung zur Verbindung eines ersten Filtermaterialstreifens der Tabak verarbeitenden Industrie und eines zweiten Filtermaterialstreifens der Tabak verarbeitenden Industrie, wobei eine Verbindungsvorrichtung, insbesondere Heizvorrichtung, und eine erste und eine zweite Klemmvorrichtung vorgesehen sind, wobei die erste Klemmvorrichtung, die Verbindungsvorrichtung und die zweite Klemmvorrichtung hintereinander, insbesondere im Wesentlichen in einer Flucht, angeordnet sind.

Im Rahmen der Erfindung ist anschließend von einer Heizvorrichtung die Rede. Hiermit ist allgemein auch eine Verbindungsvorrichtung gemeint. In der Verbindungsvorrichtung kann auch eine Verbindung durch Klebemittel oder Klemmmittel erfolgen.

Durch die erfindungsgemäße Vorrichtung ist eine homogenere Verteilung der Filamente der Filtermaterialstreifen für die Verbindung der Filtermaterialstreifen möglich. Die Heizvorrichtung ist vorzugsweise im Wesentlichen in einer Flucht zwischen der ersten und zweiten Klemmvorrichtung angeordnet, die beabstandet zu der Heizvorrichtung sind.

Im Rahmen der Erfindung bedeutet im Wesentlichen in einer Flucht zwischen der ersten und der zweiten Klemmvorrichtung im Wesentlichen auf einer Linie, insbesondere auf einer Linie zwischen der ersten und der zweiten Klemmvorrichtung.

Insbesondere vorzugsweise haben die Klemmvorrichtungen und die Heizvorrichtung jeweils eine Längserstreckung, die quer, insbesondere im Wesentlichen senkrecht, zur Längserstreckung von in diese Vorrichtungen eingelegte Filtermaterialstreifen angeordnet ist.

Im Rahmen der Erfindung ist eine Klemmvorrichtung insbesondere eine mechanische Klemmvorrichtung. Die Klemmvorrichtung kann aber auch mittels Saugluft eine Klemmung erzielen, wobei vorzugsweise die Haltekraft und ferner vorzugsweise eine auf die Filtermaterialstreifenabschnitte einwirkende Zugkraft bzw. Streckkraft einstellbar und/oder regelbar ist.

Wenn vorzugsweise der Abstand zwischen der Heizvorrichtung und wenigstens einer der Klemmvorrichtungen variierbar ist, kann sehr definiert eine vorgesehene Streckkraft auf die Filtermaterialstreifen ausgeübt werden. Aufgrund dieses Merkmals ist eine Automatisierung des erfindungsgemäßen Verfahrens vereinfacht.

Wenn der Abstand zwischen der Heizvorrichtung und wenigstens einer der Klemmvorrichtungen variierbar ist, ist insbesondere auch der Abstand zwischen beiden Klemmvorrichtungen variierbar. Für das Strecken des ersten und des zweiten Filtermaterialstreifens mit einer vorgebbaren Streckkraft können insbesondere vorzugsweise die Filtermaterialstreifen in die beiden Klemmvorrichtungen eingeklemmt werden und entsprechend mit vorgebbarer Streckkraft gestreckt werden, um dann anschließend in der Heizvorrichtung im Verbindungsbereich die Filtermaterialstreifen zu verbinden. Vorzugsweise können die Abstände beider Klemmvorrichtungen zur Heizvorrichtung variiert werden.

Vorzugsweise weist die Heizvorrichtung eine dritte Klemmvorrichtung zum Einklemmen der Filtermaterialstreifen auf. Hierbei kann es sich um beispielsweise einen Hebel handeln, der mit einer, insbesondere vorgebbaren Klemmkraft bzw. einem, insbesondere vorgebbaren, Klemmmoment auf eine Unterlage gedrückt wird. Hierzu kann ein vorgebbares Gewicht oder ein Magnet dienen bzw. eine Hydraulik oder ein Schraubenmechanismus.

Vorzugsweise weist die Heizvorrichtung einen Heizdraht auf. Hierbei handelt es sich um eine sehr einfache und kostengünstig zu realisierende Heizvorrichtung.

Vorzugsweise ist die Heizvorrichtung wenigstens teilweise mit einem über 320°C schmelzenden Kunststoff beschichtet, wobei der Kunststoff insbesondere auf Perfluoralkoxy-Basis hergestellt ist.

Diese Maßnahme dient dazu, dass bei der Verbindung der Filtermaterialstreifen diese nicht an der Heizung anhaften. Aus diesem Grund eignet sich als Kunststoff beispielsweise Polytetrafluorethylen, das auch als Teflon bekannt ist, oder ein Perfluorkautschuk, der eine hohe Schmelztemperatur aufweist. Es können auch andere Kunststoffe oder weitere Materialien Verwendung finden, um die Heizvorrichtung wenigstens teilweise zu beschichten, wobei diese Materialien dann dazu dienen, eine geringe Anhaftungsneigung der Filtermaterialstreifen im Verbindungsbereich mit der Heizvorrichtung zu ermöglichen.

Vorzugsweise wird die Heizvorrichtung beispielsweise mit Kunststoffbändern, die einfach aufgelegt oder eingeklemmt werden, beschichtet.

Eine besonders einfache mechanische Lösung für eine erste und/oder zweite Klemmvorrichtung liegt dann vor, wenn die Klemmvorrichtung ein Basisteil, ein Mittelteil und ein Oberteil aufweist, wobei wenigstens zwei der Teile verschwenkbar sind.

Eine sehr gut für die Automation verwendbare Lösung liegt dann vor, wenn wenigstens eine Klemmvorrichtung ein Basisteil, zwei Mittelteile und ein Oberteil aufweist oder zwei Basisteile und zwei Oberteile aufweist, wobei insbesondere wenigstens zwei der Teile verschwenkbar sind. Vorzugsweise können auch drei der Teile oder alle vier Teile verschwenkbar sein.

Vorzugsweise wird durch Veränderung des Abstandes zwischen der Heizvorrichtung und der wenigstens einen Klemmvorrichtung oder durch Veränderung des Abstandes zwischen den zwei Klemmvorrichtungen eine vorgebbare Streckkraft auf wenigstens einen eingeklemmten Filtermaterialstreifen ausgeübt. Der Filtermaterialstreifen kann dann entweder in einer der beiden Klemmvorrichtungen und der Heizvorrichtung eingeklemmt sein oder in den beiden Klemmvorrichtungen.

Vorzugsweise ist eine Heizperiode und/oder die Temperatur der Heizungsvorrichtung einstellbar, steuerbar und/oder regelbar.

Es ist besonders bevorzugt, wenn ein Sensor vorgesehen ist, der ein Ablösen eines Filtermaterialstreifenabschnitts von dem Filtermaterialstreifen detektiert. Bei dem Sensor kann es sich um eine Lichtschranke handeln oder um einen Kraftsensor. Der Kraftsensor ist hierbei beispielsweise an einer Klemmvorrichtung angeordnet und detektiert die Zugkraft, die auf einen oder zwei Filtermaterialstreifenabschnitte ausgeübt wird.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische vereinfachte dreidimensionale Darstellung einer erfindungsgemäßen Vorrichtung zur Verbindung von Filtermaterialstreifen, und
- Fig. 2: eine schematische Darstellung einer weiteren erfindungsgemäßen Vorrichtung zur Verbindung von Filtermaterialstreifen.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

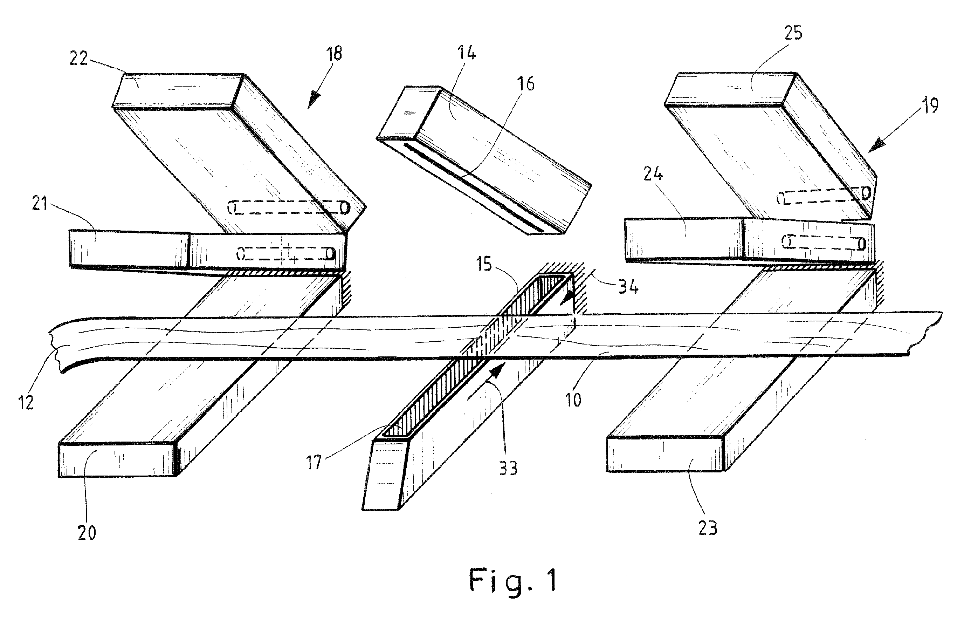

Fig. 1 zeigt eine schematische vereinfachte dreidimensionale Darstellung einer erfindungsgemäßen Vorrichtung zur Verbindung von Filtermaterialstreifen. Es ist ein erster Filtertowstreifen 10 dargestellt, der zwischen einem unteren Klemmklotz 20 und einem mittleren Klemmklotz 21 einer ersten Klemmvorrichtung 18 und einem unteren Klemmklotz 23 und einem mittleren Klemmklotz 24 einer zweiten Klemmvorrichtung 19 angeordnet ist. Zwischen der ersten Klemmvorrichtung 18 und der zweiten Klemmvorrichtung 19 ist eine Heizvorrichtung fluchtend bzw. in einer Linie zwischen diesen Klemmvorrichtungen 18 und 19 angeordnet. Die Heizvorrichtung umfasst eine erste Schweißbacke 14, eine zweite Schweißbacke 15. Die erste Schweißbacke 14 weist einen Heizdraht 16 auf, der in längsaxialer Erstreckung der ersten Schweißbacke 14 angeordnet ist. Gegenüber dem Heizdraht 16 ist eine Auflage 17 vorgesehen, die beispielsweise aus Silikon besteht und eine Dicke von beispielsweise 0,5 mm bis 2 mm, vorzugsweise 1 mm aufweist. Auf der Auflage 17 und/oder auf dem Heizdraht 16 bzw. der Oberfläche der ersten Schweißbacke 14, an der der Heizdraht 16 angeordnet ist, ist eine nicht dargestellte Beschichtung bzw. eine Auflage vorgesehen, die aus Kunststoff gebildet ist, mit einer Schmelztemperatur von oberhalb 320°C. Dieser Kunststoff sollte eine geringe Haftungsneigung mit dem Filtermaterialstreifenmaterial aufweisen. Hierbei handelt es sich beispielsweise um Polytetrafluorethylen oder Perfluorkautschuk.

Der zwischen den jeweiligen unteren und mittleren Klemmklötzen eingelegte Filtertowstreifen 10 weist an der linken Seite das Ende des ersten Filtertowstreifens 12 auf. Auf der rechten Seite ist der Filtertowstreifen 10 unterbrochen dargestellt. An dieser Stelle führt der Filtertowstreifen zur Filterstrangmaschine. Um nun eine Verbindung zwischen diesem, sich dem Ende neigenden Filtertowstreifen 10 und einem neuen Filtertowstreifen zu ermöglichen, wird ein weiterer Filtertowstreifen 11, der in Fig. 1 nicht dargestellt ist, zwischen dem mittleren Klemmklotz 21 und dem oberen Klemmklotz 22 der ersten Klemmvorrichtung 18 und zwischen dem mittleren Klemmklotz 24 und dem oberen Klemmklotz 25 der zweiten Klemmvorrichtung 19 angeordnet.

Die Klemmklötze werden dann an den schematisch dargestellten Drehachsen zur Klemmung verschwenkt. Anschließend werden die beiden eingelegten Filtertowstreifen 10 und 11 durch eine entsprechende Zugkraft gestreckt, beispielsweise durch Vergrößern des Abstandes zwischen den beiden Klemmvorrichtungen 18 und 19. Die Streckung sollte hierbei nicht zu einer plastischen Dehnung der Filamente der Filtertowstreifen 10 und 11 führen, um beim anschließenden Entlasten kein Aufbauschen der Filamente zu erzeugen. Durch das Strecken wird eine homogenere Verteilung der Filamente vor der Verschweißung erzielt. Es werden dann die erste Schweißbacke 14 und die zweite Schweißbacke 15 der Heizvorrichtung zusammengebracht und anschließend der Abstand zwischen der zweiten Klemmvorrichtung 19 und der Heizvorrichtung wieder so verringert, dass keine Spannung mehr auf den Filtertowabschnitten zwischen der zweiten Klemmvorrichtung 19 und der Heizvorrichtung vorherrscht. Alternativ können auch die Klemmklötze 23, 24 und 25 geöffnet werden.

Die erste Schweißbacke 14 und die zweite Schweißbacke 15 der Heizvorrichtung kann beispielsweise durch eine nicht dargestellte Klemmzange zusammengedrückt werden, die durch einen Betätigungshebel, der beispielsweise eine Länge von 15 cm aufweist, gegen eine Druckfeder zusammengedrückt wird, wodurch zwei ca. 30 cm lange Schenkel der Zange, beispielsweise mit einem Schließmoment von ungefähr 5 Nm zusammengedrückt werden. Es kann dann noch ein zusätzliches Druckmoment an den Enden der Schenkel ausgeübt werden von beispielsweise ca. 16 Nm. Diese zusätzliche Flächenpressung sollte beim Heizvorgang angewendet werden.

Die beiden Schweißbacken 14 und 15 können allerdings auch durch andere Maßnahmen aufeinander gepresst werden.

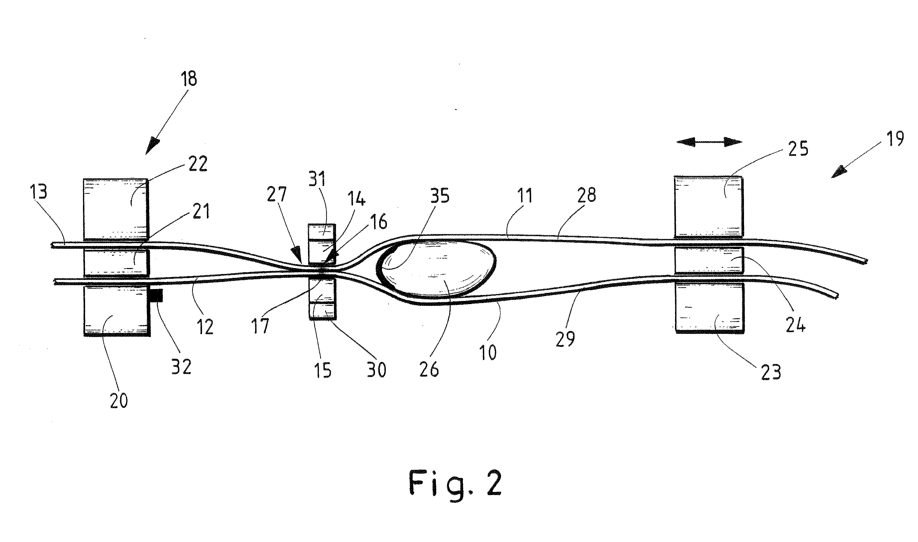

Nach entsprechendem Erhitzen des Heizdrahtes 16 und entsprechendem Verschmelzen der Filtertowstreifen lösen sich dann das Ende des ersten Filtertowstreifens 12 und der Anfang des zweiten Filtertowstreifens 13 (siehe Fig. 2) von der Verbindungsstelle 27 und die entsprechenden zur Weiterverarbeitung zu verwendenden Abschnitte der Filtertowstreifen sind miteinander verbunden.

In Fig. 2 ist schematisch in einer Schnittdarstellung eine vereinfachte erfindungsgemäße Vorrichtung zur Verbindung von zwei Filtermaterialstreifen 10 und 11 dargestellt. In dieser Darstellung sind auch Klemmhebel 30 und 31 dargestellt, die beispielsweise ein Abschnitt einer Klemmzange sein können, wie beispielsweise die Schenkel einer Klemmzange oder Endabschnitte eine Hydraulik darstellen können. Die Verwendung einer Hydraulik hätte den Vorteil, dass eine Annäherung der Schweißbacken 14 und 15 in gleichmäßiger Form, also nicht durch eine Verschwenkung ermöglicht wäre, sondern durch ein beispielsweise Absenken der ersten und in diesem Beispiel oben liegenden Schweißbacke 14, so dass der Schweißdraht 16 sich im Wesentlichen gleichförmig in Richtung der Oberfläche der unteren zweiten Schweißbacke 15 nähert und dann mit einem gleichmäßigen Druck bzw. einer gleichmäßigen Kraft über die längsaxiale Erstreckung der Schweißbacken ein gleichmäßiger Druck auf die eingelegten Filtertowstreifen ausgeübt werden kann.

In Fig. 2 ist schematisch der Moment dargestellt, in dem zwischen dem Verbindungsbereich 27, also zwischen der Heizvorrichtung und der zweiten Klemmvorrichtung 19 der Abstand nach der Streckung schon wieder verringert wurde, so dass die Weiterverarbeitungsabschnitte 28 und 29 der Filtertowstreifen 10 und 11 sich entspannt haben. Die Veränderung des Abstandes ist schematisch durch den Doppelpfeil oberhalb der zweiten Klemmvorrichtung 19 angedeutet.

Zwischen der Heizvorrichtung bzw. dem Verbindungsbereich 27 und der ersten Klemmvorrichtung 18 herrscht noch in den Filtertowstreifenabschnitten 12 (Ende des ersten Filtertowstreifens) und 13 (Anfang des zweiten Filtertowstreifens) eine entsprechende Spannung bzw. Zugkraft. Wenn die Verbindung zwischen den Filtertowstreifen 10 und 11 in der Heizvorrichtung erfolgt ist, werden die Filtertowstreifenabschnitte 12 und 13 von der Verbindungsstelle gelöst, so dass sich die zwischen der ersten Klemmvorrichtung 18 und der Heizvorrichtung vorherrschende Zugspannung löst. Ein entsprechend dargestellter Kraftsensor 32 kann dann dazu dienen, diesen Moment zu detektieren, um automatisch den Heizvorgang und damit den Verbindungsvorgang der Filtertowstreifen 10 und 11 zu beenden.

Anschließend kann noch mittels einer Nahtplätte 26 die sich gebildete Verbindungsnaht geplättet werden, beispielsweise wird an einer geeigneten Stelle, in Fig. 2 an der linken Wand der Nahtplätte 26, ein Heizband 35 von 3 bis 10 mm Breite angebracht. Durch Erwärmen und Ausüben eines entsprechenden Drucks auf die Verbindungsnaht wird diese dann geplättet. Der Druck kann dadurch ausgeübt werden, dass die Nahtplätte 26 gegen eine nicht dargestellte Platte drückt, die zwischen die Heizvorrichtung und die Nahtplätte 26 eingeschwenkt werden kann. Alternativ kann mit der zweiten Klemmvorrichtung 19 ein entsprechender Zug auf die verbundenen Weiterverarbeitungsabschnitte 28 und 29 der Filtertowstreifen 10 und 11 ausgeübt werden, so dass die Verbindungsnaht gegen die erwärmte Nahtplätte 26 drückt.

Die Schweißdauer beträgt je nach verwendeter Temperatur und je nach verwendetem Filtertowmaterial vorzugsweise zwischen 1 s und 15 s. Ein bevorzugter Bereich liegt bei 5 s bis 10 s.

Bei dem Einlegen der Filtertowstreifen ist vorzugsweise darauf zu achten, dass das Filtertow nicht zu breit gespreizt wird. Hierzu können auch entsprechende Vorrichtungen dienen, die im Bereich der Klemmvorrichtung 18 und 19 den jeweiligen eingelegten Filtertowstreifen vor der Klemmung zusammenschieben bzw. zusammendrücken, und zwar in längsaxialer Richtung der Erstreckung der Klemmvorrichtungen 18 bzw. 19. Besonders bevorzugt ist es, wenn die Filtertowstreifen im Bereich der Heizvorrichtung zusammengeschoben werden. Hierzu dienen die schematischen Pfeile 33 und 34, die zur Veranschaulichung eine Schieberichtung darstellen sollen. Insbesondere ist es bevorzugt, wenn der zweite Filtertowstreifen 11, also der Filtertowstreifen dem der Anfang des neu zu verwendenden Towballens zugerechnet wird, enger zusammengeschoben wird, als das Ende 12 des fast aufgebrauchten Towballens.

Durch die homogene Verteilung der Filamente der Filtertowstreifen 10 und 11 wird bei der Verbindung der Filtertowstreifen 10 und 11 eine sehr gleichmäßige und stabile Naht erzielt. Gleichzeitig wird die Standzeit von zur Beschichtung bzw. als Auflage in der Heizvorrichtung verwendeter Teflonbänder deutlich länger, bspw. mindestens um den Faktor 5. Dieses wird durch eine deutliche Reduktion der ansonsten verwendeten Heizdrahttemperatur erreicht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: erster Filtertowstreifen
- 11: zweiter Filtertowstreifen
- 12: Ende des ersten Filtertowstreifens
- 13: Anfang des zweiten Filtertowstreifens
- 14: erste Schweißbacke
- 15: zweite Schweißbacke
- 16: Heizdraht
- 17: Auflage
- 18: erste Klemmvorrichtung
- 19: zweite Klemmvorrichtung
- 20: unterer Klemmklotz
- 21: mittlerer Klemmklotz
- 22: oberer Klemmklotz
- 23: unterer Klemmklotz
- 24: mittlerer Klemmklotz
- 25: oberer Klemmklotz
- 26: Nahtplätte
- 27: Verbindungsbereich
- 28: Weiterverarbeitungsabschnitt
- 29: Weiterverarbeitungsabschnitt
- 30: Klemmhebel
- 31: Klemmhebel
- 32: Kraftsensor
- 33: Schieberichtung
- 34: Schieberichtung
- 35: Heizband

## Patentansprüche

1. Verfahren zum Verbinden eines ersten Filtermaterialstreifens (10) der Tabak verarbeitenden Industrie mit einem zweiten Filtermaterialstreifen (11) der Tabak verarbeitenden Industrie mit den folgenden Verfahrensschritten:
- Strecken des ersten und des zweiten Filtermaterialstreifens (10, 11) mit einer, insbesondere vorgebbaren, Streckkraft,
- Übereinanderlegen des ersten und des zweiten Filtermaterialstreifens (10, 11) zumindest in einem Verbindungsbereich (27),
- Lösen der Streckkraft bei den Abschnitten (28, 29) der Filtermaterialstreifen (10, 11), die zur Weiterverarbeitung dienen, und
- Verbinden der Filtermaterialstreifen (10, 11) in dem Verbindungsbereich.

2. Verfahren nach Anspruch 1, **dadurch gekennzeichnet, dass** reckfrei gestreckt wird, wobei insbesondere eine Streckkraft zwischen 0,1 N und 100 N, insbesondere zwischen 1 N und 10 N, verwendet wird.

3. Verfahren nach Anspruch 1 oder 2, **dadurch gekennzeichnet, dass** das Übereinanderlegen ein Aufeinanderdrücken umfasst, wobei insbesondere die Filtermaterialstreifen (10, 11) längsaxial übereinander gelegt werden.

4. Verfahren nach einem der Ansprüche 1 bis 3, **dadurch gekennzeichnet, dass** das Verbinden durch Wärmeschweißen geschieht, wobei insbesondere das Wärmeschweißen in einem Temperaturbereich von 150°C bis 310°C, insbesondere von 200°C bis 250°C, stattfindet.

5. Verfahren nach Anspruch 4, **dadurch gekennzeichnet, dass** während des Wärmeschweißens eine vor dem Wärmeschweißen vorherrschende Flächenpressung im Verbindungsbereich (27) erhöht ist oder wird, wobei insbesondere ein Druckmoment von 10 Nm bis 40 Nm, insbesondere 12 Nm bis 20 Nm, verwendet wird.

6. Verfahren nach einem der Ansprüche 1 bis 5, **dadurch gekennzeichnet, dass** die nicht zur Weiterverarbeitung dienenden Filtermaterialstreifenabschnitte (12, 13) abgezogen werden.

7. Verfahren nach Anspruch 6, **dadurch gekennzeichnet, dass** das Abziehen ein Beenden des Verbindens der Filtermaterialstreifen (10, 11) initiiert.

8. Verfahren nach einem der Ansprüche 1 bis 7, **dadurch gekennzeichnet, dass** eine sich bildende Verbindungsnaht anschließend geplättet wird.

9. Vorrichtung zur Verbindung eines ersten Filtermaterialstreifens (10) der Tabak verarbeitenden Industrie und eines zweiten Filtermaterialstreifens (11) der Tabak verarbeitenden Industrie, wobei eine Verbindungsvorrichtung, insbesondere Heizvorrichtung (14-17), und eine erste und eine zweite Klemmvorrichtung (18, 19) vorgesehen sind, **dadurch gekennzeichnet, dass** die erste Klemmvorrichtung (18), die Verbindungsvorrichtung (14-17) und die zweite Klemmvorrichtung (19) hintereinander, insbesondere im Wesentlichen in einer Flucht, angeordnet sind.

10. Vorrichtung nach Anspruch 9, **dadurch gekennzeichnet, dass** der Abstand zwischen der Heizvorrichtung (14-17) und wenigstens einer der Klemmvorrichtungen (18, 19) variierbar ist, wobei insbesondere die Heizvorrichtung (14-17) eine dritte Klemmvorrichtung (14, 15, 30, 31) zum Einklemmen der Filtermaterialstreifen (10, 11) aufweist, wobei insbesondere die Heizvorrichtung (14-17) einen Heizdraht (16) aufweist, wobei insbesondere die Heizvorrichtung (14-17) wenigstens teilweise mit einem über 320°C schmelzenden Kunststoff beschichtet ist, wobei der Kunststoff insbesondere auf Perfluoralkoxy-Basis hergestellt ist.

11. Vorrichtung nach Anspruch 9 oder 10, **dadurch gekennzeichnet, dass** wenigstens eine Klemmvorrichtung (18, 19) ein Basisteil (20, 23), ein Mittelteil (21, 24) und ein Oberteil (22,25) aufweist, wobei wenigstens zwei der Teile verschwenkbar sind.

12. Vorrichtung nach Anspruch 9 oder 10, **dadurch gekennzeichnet, dass** wenigstens eine Klemmvorrichtung (18, 19) ein Basisteil (20, 23), zwei Mittelteile (21, 24) und ein Oberteil (22, 25) aufweist, wobei wenigstens zwei der Teile verschwenkbar sind.

13. Vorrichtung nach einem der Ansprüche 10 bis 12, **dadurch gekennzeichnet, dass** durch Veränderung des Abstandes zwischen der Heizvorrichtung (14-17) und der wenigstens einen Klemmvorrichtung (18, 19) oder durch Veränderung des Abstandes zwischen den zwei Klemmvorrichtungen (18, 19) eine vorgebbare Streckkraft auf wenigstens einen eingeklemmten Filtermaterialstreifen (10, 11) ausgeübt wird.

14. Vorrichtung nach einem der Ansprüche 9 bis 13, **dadurch gekennzeichnet, dass** eine Heizperiode und/oder die Temperatur der Heizungsvorrichtung (14-17) einstellbar, steuerbar und/oder regelbar ist.

15. Vorrichtung nach einem der Ansprüche 9 bis 14, **dadurch gekennzeichnet, dass** ein Sensor (32) vorgesehen ist, der ein Ablösen eines Filtermaterialstreifenabschnitts (12, 13) von dem Filtermaterialstreifen (10, 11) detektiert.
